# EUROPÄISCHE PATENTANMELDUNG

(11) **EP 1 847 649 A1**
(43) Veröffentlichungstag der Anmeldung: **24.10.2007**
(21) Anmeldenummer: 07007881.1
(22) Anmeldetag: 18.04.2007
(51) Int. Cl.: E01H 1/12

(54) **Aufsammel- und Transportvorrichtung**

(30) Priorität: 18.04.2006 DE 202006006198 U
(71) Anmelder: Friz, Karl, 73663 Berglen-Öschelbronn (DE)
(72) Erfinder: Friz, Karl, 73663 Berglen-Öschelbronn (DE)
(74) Vertreter: Beetz & Partner

(57) **Zusammenfassung**

Die Erfindung betrifft eine Aufsammel- und Transportvorrichtung zum Aufsammeln und Transportieren von Gegenständen, bei der ein Behälter, der einen Deckel (2) aufweist, und eine Befestigungseinrichtung, mittels der der Behälter (1) an einem Stab oder Spazierstock (10) anbringbar ist, vorgesehen ist. Der Behälter (1) ist an dem Stab oder Spazierstock (10) verschwenkbar angeordnet und der Behälter (1) mittels einer Betätigungseinrichtung in eine Transport-Position oder eine Aufsammel-Position bringbar. Die Betätigungseinrichtung ist in dauerndem Eingriff mit dem Behälter (1) und der Deckel (2) für die Transport-Position ist schließbar und für die Aufsammel-Position aufmachbar, wobei die Bewegung des Deckels (2) mit der Bewegung des Behälters (1) gekoppelt ist.

## Beschreibung

Die Erfindung betrifft eine Aufsammel- und Transportvorrichtung zum Aufsammeln und Transportieren von Gegenständen. Die Aufsammel- und Transportvorrichtung weist einen Behälter mit Deckel auf und eine Befestigungseinrichtung, mittels der der Behälter an einem Stab oder Spazierstock anbringbar ist.

Herkömmliche Vorrichtungen zum Aufsammeln und Transportieren von Gegenständen weisen in der Regel mehrere voneinander unabhängige Vorrichtungen auf: Eine Vorrichtung zum Aufsammeln und eine weitere Vorrichtung zum Transportieren der Gegenstände. Deswegen gestaltet sich der Vorgang des Aufsammelns und Transportierens relativ aufwändig, weil er sich in die zwei Teilbereiche, einerseits Aufsammeln und andererseits Transportieren, aufgliedert.

Beispielsweise ist es bei Wertgegenständen wünschenswert, diese unmittelbar nach dem Aufsammeln für den Transport sicher zu verwahren, damit sie nicht verloren gehen. Eine Trennung der Bereiche Aufsammeln und Transportieren ist hier besonders nachteilig.

Bei Unrat und/oder Fäkalien ist die erneute Handhabung von der Vorrichtung zum Aufsammeln in die Vorrichtung zum Transportieren mit Nachteilen wie insbesondere der Gefahr der Verunreinigung von Kleidung verbunden. So muss beispielsweise bei der Beseitigung von Hundekot dieser zunächst mit einer Schaufel oder ähnlichem aufgenommen werden und dann zweckmäßigerweise in einen Behälter mit Geruchsverschluss, wie beispielsweise eine Tüte, umgefüllt werden, damit beim Transport bis zum nächsten Abfalleimer die Verunreinigungsgefahr und/oder Geruchsbelästigung minimiert ist. Dabei ist aber einerseits schon die Schaufel verunreinigt, die zur Vermeidung von Verunreinigung und/ oder Geruchsbelästigung wiederum in einem separaten Transportbehälter untergebracht werden sollte. Andererseits ist die Verunreinigungsgefahr und/ oder Geruchsbelästigung beim Umfüllen von Hundekot aus einer Schaufel in eine Tüte nicht gerade klein.

Demgegenüber ist es eine Aufgabe der Erfindung, eine Aufsammel- und Transportvorrichtung zu schaffen, die ein effektiveres Aufsammeln und Transportieren von Gegenständen ermöglicht.

Die Aufgabe wird durch die Merkmale des Anspruchs 1 gelöst. In den Unteransprüchen sind bevorzugte Ausführungsbeispiele bzw. Weiterbildungen des Erfindungsgegenstands angegeben.

Eine erfindungsgemäße Aufsammel- und Transportvorrichtung zum Aufsammeln und Transportieren von Gegenständen kann einen Behälter mit einem Deckel und eine Befestigungseinrichtung aufweisen, mittels der der Behälter an einem Stab oder Spazierstock anbringbar ist.

Der Behälter der erfindungsgemäßen Aufsammel- und Transportvorrichtung kann an dem Stab oder Spazierstock verschwenkbar angeordnet sein.

Mittels einer Betätigungseinrichtung kann der Behälter der erfindungsgemäßen Aufsammel- und Transportvorrichtung in eine Transport-Position oder eine Aufsammel-Position bringbar sein.

Erfindungsgemäß kann die Betätigungseinrichtung in dauerndem Eingriff mit dem Behälter sein.

Gemäß der vorliegenden Erfindung kann der Deckel für die Transport-Position des Behälters schließbar und für die Aufsammel-Position aufmachbar sein.

Weiter kann erfindungsgemäß die Bewegung des Deckels mit der Bewegung des Behälters gekoppelt sein.

Der Behälter kann erfindungsgemäß im Bereich des unteren Endes des Stabes oder Spazierstocks angebracht sein, wobei zumindest in der Transport-Position die Hochachse des Behälters parallel zur Achse des Stabes oder Spazierstocks ausgerichtet ist.

Der Stab oder Spazierstock kann gemäß der vorliegenden Erfindung den Behälter zumindest in der Transport-Position nach unten überragen.

Der Deckel kann erfindungsgemäß gleichzeitig oder zeitlich versetzt mit der Behälterbewegung in eine Transport-Position schließbar sein und gleichzeitig oder zeitlich versetzt mit der Behälterbewegung in eine Aufsammel-Position aufmachbar sein.

Erfindungsgemäß kann der Behälter mit einem Scharnier an dem Stab oder Spazierstock angebracht sein.

Gemäß der vorliegenden Erfindung kann eine Betätigungseinrichtung ein erstes Kraftübertragungselement, das an Längsführungen geführt ist, enthalten. Weiter kann an dem ersten Kraftübertragungselement mindestens ein zweites Kraftübertragungselement an seinem einen Ende drehbar befestigt sein. Ein anderes Ende des zweiten Kraftübertragungselements kann erfindungsgemäß drehbar an einem Behälter angebracht sein. Weiter kann das zweite Kraftübertragungselement an seinem einen Ende über ein Rückhalteelement mit dem Stab oder Spazierstock verbunden sein. An einem oberen Ende des ersten Kraftübertragungselements kann erfindungsgemäß ein Betätigungselement vorgesehen sein.

Erfindungsgemäß kann das zweite Kraftübertragungselement an einer Seite des Behälters angebracht sein, oder es kann je ein zweites Kraftübertragungselement beispielsweise an gegenüberliegenden Seiten des Behälters angebracht sein.

Der Behälter kann gemäß der vorliegenden Erfindung eine vieleckige oder ovale Querschnittsfläche aufweisen oder keilförmig sein.

Die Öffnungsrichtung des Deckels kann erfindungsgemäß zum Stab oder Spazierstock hin oder vom Stab oder Spazierstock weg gerichtet sein.

Gemäß der vorliegenden Erfindung kann der Öffnungswinkel des Deckels 30°, 45°, 60°, 75°, 90°, 105°, 120° oder 135° betragen.

Die Gegenstände, die mit der erfindungsgemäßen Aufsammel- und Transportvorrichtung aufgesammelt und transportiert werden, können Wertgegenstände, Unrat oder Fäkalien sein.

Weitere Besonderheiten und Vorzüge der Erfindung ergeben sich aus der folgenden Beschreibung der bevorzugten Ausführungsbeispiele bzw. Weiterbildungen anhand der beigefügten Zeichnungen. In diesen zeigt:
- Fig. 1: eine vereinfachte unmaßstäbliche Gesamtdarstellung einer erfindungsgemäßen Aufsammel- und Transportvorrichtung in der Transport-Position;
- Fig. 2: eine vereinfachte unmaßstäbliche Gesamtdarstellung einer erfindungsgemäßen Aufsammel- und Transportvorrichtung in der Aufsammel-Position; und
- Fig. 3: eine vereinfachte unmaßstäbliche Gesamtdarstellung einer weiteren erfindungsgemäßen Aufsammel- und Transportvorrichtung in der Transport-Position;

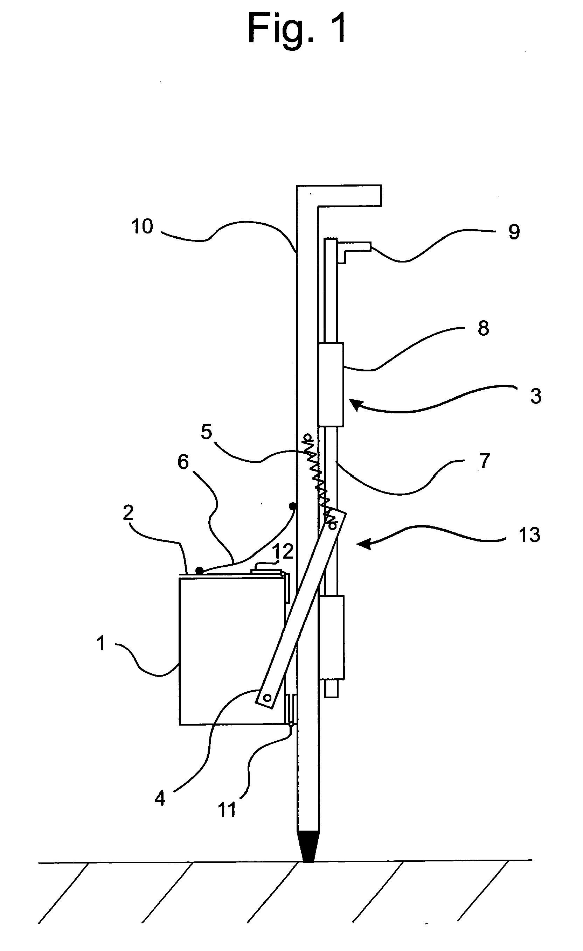

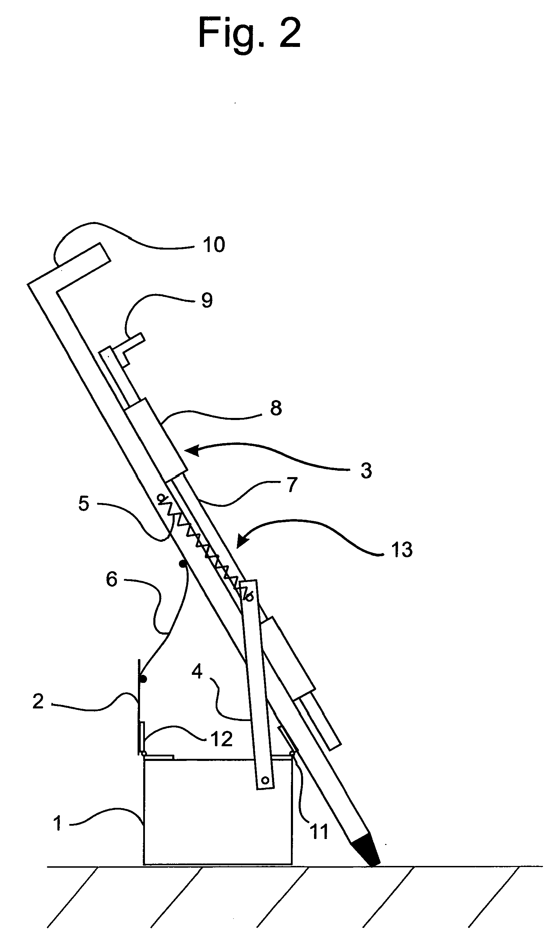

Mit Bezug auf die Fig. 1 und Fig. 2 sollen ein erstes Ausführungsbeispiel der Erfindung näher erläutert werden.

In Fig. 1 ist eine erfindungsgemäße Aufsammel- und Transportvorrichtung in der Transport-Position dargestellt, die mittels einer Befestigungseinrichtung 3, die in diesem Fall zwei Längsführungen 8 enthält, an einem Spazierstock 10 angebracht ist.

Eine Betätigungseinrichtung 13 enthält ein erstes Kraftübertragungselement 7, das an den Längsführungen 8 geführt ist. An dem ersten Kraftübertragungselement 7 ist ein zweites Kraftübertragungselement 4 an seinem einen Ende drehbar befestigt. Ein anderes Ende des zweiten Kraftübertragungselements 4 ist drehbar an einem Behälter 1 angebracht. Das zweite Kraftübertragungselement 4 ist an seinem einen Ende über ein Rückhalteelement 5 mit dem Spazierstock 10 verbunden. An einem oberen Ende des ersten Kraftübertragungselements 7 ist ein Betätigungselement 9 vorgesehen.

Das Rückhalteelement 5 kann eine Zugfeder, ein Gummiband oder ein anderes elastisches Element aufweisen.

Das erste Kraftübertragungselement 7 kann ein stabförmiges Voll- oder Hohlprofil aus Metall, Holz oder Kunststoff sein. Die Längsführungen 8 lassen eine Verschiebung des ersten Kraftübertragungselements 7 in dessen Längsrichtung bei relativ wenig Spiel zu.

Der Behälter 1 ist mit einem ersten Scharnier 11 im Bereich des unteren Endes eines Spazierstocks 10 befestigt und weist einen Deckel 2 auf, der mit einem zweiten Scharnier 12 am Behälter 1 befestigt ist. Die Hochachse des Behälters 1 ist im Wesentlichen parallel zur Achse des Spazierstocks 10 ausgerichtet. Der Deckel 2 ist über ein Zugband 6 mit dem Spazierstock 10 verbunden.

Durch das Rückhalteelement 5 wird das zweite Kraftübertragungselement 4, das erste Kraftübertragungselement 7 und der Behälter 1 mit dem Deckel 2 in der in Fig. 1 dargestellten Transport-Position gehalten.

Die in Fig. 2 dargestellte Aufsammel-Position wird erreicht, indem auf das Betätigungselement 9 eine Kraft ausgeübt wird, die das erste Kraftübertragungselement 7 entgegen der Kraft des Rückhalteelements 5 in den Längsführungen 8 nach unten bewegt. Somit bewegt sich auch das eine Ende des zweiten Kraftübertragungselements 4 nach unten und der Behälter 1 wird durch das entstehende Drehmoment aus der Transport-Position in die Aufsammel-Position geschwenkt. Bei dieser Schwenkbewegung wird der Deckel 2 von dem Zugband 6 zurückgehalten und geöffnet.

Das zweite Kraftübertragungselement 4 ist an der Seite des Behälters 1 angebracht. Insbesondere bei größeren Behältern 1 kann zur besseren Führung des Behälters 1 während der Drehbewegung je ein zweites Kraftübertragungselement 4 beispielsweise an gegenüberliegenden Seiten des Behälters angebracht sein.

Sobald die Kraft von dem Betätigungselement 9 genommen wird, zieht das Rückhalteelement 5 das eine Ende des zweiten Kraftübertragungselements 4 und somit das erste Kraftübertragungselement 7 zurück. Dabei schwenkt der Behälter 1 wieder in die Transport-Position und der Deckel 2 wird geschlossen. Die Bewegung des Deckels 2 kann gleichzeitig mit der Behälterbewegung erfolgen oder zeitlich versetzt.

Dabei kann das Rückhalteelement 5 so ausgelegt sein, dass der Deckel 2 mit einer Restzugkraft zugehalten wird, um beispielsweise das unbeabsichtigt Aufklappen des Deckels 2 beim Gebrauch des Spazierstocks 10 zu verhindern. Bei Wertgegenständen kann so auch ein Verlust des Aufgesammelten vermieden werden, wobei bei aufgesammeltem Unrat oder Fäkalien so eine Verunreinigung der Aufsammel- und Transportvorrichtung oder der Umgebung sowie eine Geruchsbelästigung beim Fortsetzen des Spaziergangs vermieden werden kann.

Zur Vermeidung der Verunreinigung des Behälters 1 beim Aufsammeln von Unrat oder Fäkalien kann der Behälter 1 mit einer Folie ausgekleidet sein, die zusammen mit dem aufgesammelten Inhalt entsorgbar ist. Eine über den Rand des Behälters 1 gezogene Folie kann zusammen mit dem Deckel 2 eine Geruchsbelästigung noch wirksamer vermeiden, indem die Folie in der Art einer Dichtung Lücken in der Anlagefläche zwischen dem Behälter 1 und dem Deckel 2 ausgleicht. Die Folie kann eine Tüte aus Kunststoff oder Papier sein.

Die Öffnungsrichtung des Deckels kann zum Spazierstock 10 hin oder vom Spazierstock 10 weg gerichtet sein. Der Öffnungswinkel des Deckels 2 kann 30°, 45°, 60°, 75°, 90°, 105°, 120° oder 135° betragen. Falls erforderlich, kann der Öffnungswinkel des Deckels 2 auch Zwischenwerte der genannten Werte annehmen, so beispielsweise 80°, 85°, 95°, 100°, 110°, 125°, 130° oder dergleichen.

Weiter kann eine Rastung oder Klemmung an der Betätigungseinrichtung 13 vorgesehen sein, damit die Kraft nicht während des gesamten Aufsammelns auf das Betätigungselement 9 aufgebracht werden muss.

Der Behälter 1 kann beispielsweise auch mit einer einfachen Schraube durch die Behälterwand mit der Befestigungsschraube als Drehpunkt befestigt werden. Durch die Befestigung des Behälters 1 mit dem ersten Scharnier 11 am Spazierstock 10 wird erreicht, dass der Behälter 1 am Spazierstock 10 in einer höheren Lage befestigt werden kann, als bei einer Befestigung des Behälters 1 mit einer Schraube. Dadurch überragt der Spazierstock 10 den Behälter 1 in der Transport-Position und der Spazierstock 10 lässt sich unbeeinträchtigt vom Behälter 1 verwenden.

Soll nun ein Gegenstand vom Boden aufgesammelt werden, wird wie oben beschrieben die Aufsammel-Position hergestellt. Wie in Fig. 2 ersichtlich, kann der Gegenstand durch eine leichte Neigung des Spazierstocks 10 nach vorne leicht in den Behälter 1 aufgenommen werden.

Zum Befördern des Gegenstands in den Behälter 1 kann ein (nicht dargestellter) Spatel, Besen oder Greifwerkzeug mitgeführt werden, mit dem der aufzusammelnde Gegenstand in den Behälter 1 beförderbar ist. Der Spatel, Besen oder das Greifwerkzeug kann an dem Spazierstock 10 befestigbar sein.

Der Behälter 1 kann eine vieleckige, beispielsweise trapezförmige, oder ovale, insbesondere kreisförmige Querschnittsfläche aufweisen oder keilförmig sein.

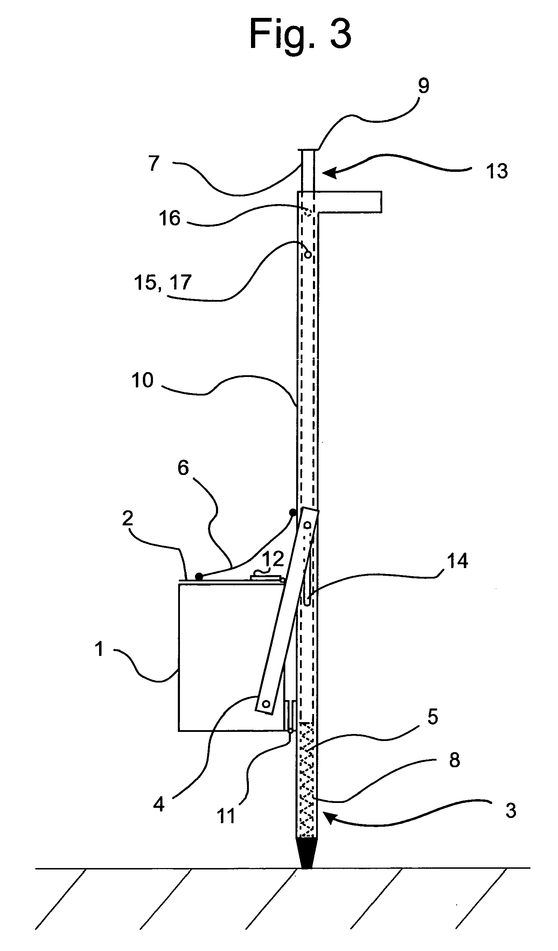

Mit Bezug auf die Fig. 3 soll ein zweites Ausführungsbeispiel der Erfindung näher erläutert werden.

In Fig. 3 ist eine weitere erfindungsgemäße Aufsammel- und Transportvorrichtung in der Transport-Position dargestellt.

Eine Betätigungseinrichtung 13 enthält ein erstes Kraftübertragungselement 7, das in einem hohlen Stab oder Spazierstock 10 geführt ist, wobei die Innenwände als Längsführungen 8 wirken. Die Längsführungen 8 sind Teil einer Befestigungseinrichtung 3, mittels derer die erfindungsgemäße Aufsammel- und Transportvorrichtung an dem Stab oder Spazierstock 10 angebracht ist.

Das erste Kraftübertragungselement 7 ragt an einem ersten Ende des Spazierstock 10 über diesen hinaus. An dem ersten Kraftübertragungselement 7 ist ein zweites Kraftübertragungselement 4 an seinem einen Ende drehbar befestigt, wobei die Befestigung durch einen Durchbruch 14 im Spazierstock 10 geführt ist. Ein anderes Ende des zweiten Kraftübertragungselements 4 ist drehbar an einem Behälter 1 angebracht. Das erste Kraftübertragungselement 7 stützt sich über ein Rückhalteelement 5 von einem zweiten Ende des Spazierstocks 10 ab. An einem oberen Ende des ersten Kraftübertragungselements 7 ist ein Betätigungselement 9 vorgesehen.

Das zweite Kraftübertragungselement 4 kann aber auch ähnlich wie in dem ersten Ausführungsbeispiel an seinem einen Ende über ein Rückhalteelement 5 mit dem Spazierstock 10 verbunden sein (in Fig. 3 nicht dargestellt).

Das Rückhalteelement 5 kann eine Zugfeder, eine Druckfeder, ein Gummiband oder ein anderes elastisches Element aufweisen.

Das erste Kraftübertragungselement 7 kann ein stabförmiges Vollprofil oder ein stabförmiges offenes oder geschlossenes Hohlprofil aus Metall, Holz oder Kunststoff sein. Die Längsführungen 8 lassen eine Verschiebung des ersten Kraftübertragungselements 7 in dessen Längsrichtung bei relativ wenig Spiel zu.

Der Behälter 1 ist mit einem ersten Scharnier 11 im Bereich des unteren Endes eines Spazierstocks 10 befestigt und weist einen Deckel 2 auf, der mit einem zweiten Scharnier 12 am Behälter 1 befestigt ist. Die Hochachse des Behälters 1 ist im Wesentlichen parallel zur Achse des Spazierstocks 10 ausgerichtet. Der Deckel 2 ist über ein Zugband 6 mit dem Spazierstock 10 verbunden.

Durch das Rückhalteelement 5 wird das zweite Kraftübertragungselement 4, das erste Kraftübertragungselement 7 und der Behälter 1 mit dem Deckel 2 in der in Fig. 3 dargestellten Transport-Position gehalten. Das erste Kraftübertragungselement 7 weist und eine zweite Öffnung 16 auf. Die erste Öffnung 15 ist der in Fig. 3 dargestellten Transport-Position zugeordnet und die zweite Öffnung 16 ist der Aufsammel-Position zugeordnet, analog der in Fig. 2 dargestellten Aufsammel-Position des ersten Ausführungsbeispiels. Der Spazierstock 10 weist seinerseits eine Öffnung 17 auf, wodurch das erste Kraftübertragungselement 7 beispielsweise mittels einem Splint oder einem Bolzen mit dem Spazierstock 10 koppelbar ist, wenn die erste Öffnung 15 oder die zweite Öffnung 16 mit der Öffnung 17 in Überdeckung ist. Auf diese Weise ist die Aufsammel- und Transportvorrichtung in der Transport-Position verriegelbar, um beispielsweise ein unbeabsichtigtes Aufklappen des Deckels 2 zu verhindern wodurch ein im Behälter 1 aufgenommener Gegenstand nicht aus dem Behälter 1 heraus fallen kann. Ebenso ist die Aufsammel- und Transportvorrichtung auf diese Weise in der Aufsammel-Position verriegelbar, um beispielsweise einen oder mehrere Gegenstände aufzusammeln ohne dauernd Kraft auf das Betätigungselement 9 ausüben zu müssen.

Für die Handhabung der Aufsammel- und Transportvorrichtung zum Aufsammeln und Transportieren von Gegenständen gemäß dem zweiten Ausführungsbeispiel gilt analog das für das erste Ausführungsbeispiel Erwähnte.

Wie oben beschrieben, hat die vorliegende Erfindung insbesondere den Vorteil, dass beim Spazierengehen bei Bedarf Gegenstände aufgesammelt und weiter transportiert werden können, ohne etwas Zusätzliches mit sich führen zu müssen, mit dem diese Gegenstände aufgesammelt und transportiert werden sollen. Die erfindungsgemäße Aufsammel- und Transportvorrichtung, die gemäß der vorliegenden Erfindung an einem Stab oder Spazierstock 10 angebracht ist, ermöglicht es, ungehindert spazierenzugehen und bei Bedarf Gegenstände effektiv aufzusammeln und zu transportieren.

Es versteht sich, dass die Erfindung nicht auf die zuvor beschriebenen Ausführungsbeispiele beschränkt ist. Unter Einbeziehung des durchschnittlichen Könnens und Wissens eines Fachmanns können sich mit der vorangegangenen Beschreibung weitere Ausführungsbeispiele ergeben, die, ohne über den Offenbarungsgehalt der Erfindung hinauszugehen, als zu der Erfindung gehörig anzusehen sind.

## Patentansprüche

1. Aufsammel- und Transportvorrichtung zum Aufsammeln und Transportieren von Gegenständen, bei der
- ein Behälter (1), der einen Deckel (2) aufweist, und
- eine Befestigungseinrichtung (3), mittels der der Behälter (1) an einem Stab oder Spazierstock (10) anbringbar ist, vorgesehen ist;
der Behälter (1) an dem Stab oder Spazierstock (10) verschwenkbar ist, und
der Behälter (1) mittels einer Betätigungseinrichtung (13) in eine Transport-Position oder eine Aufsammel-Position bringbar ist,
wobei
- die Betätigungseinrichtung (13) in dauerndem Eingriff mit dem Behälter (1) ist und
- der Deckel (2) für die Transport-Position schließbar ist und für die Aufsammel-Position aufmachbar ist, wobei die Bewegung des Deckels (2) mit der Bewegung des Behälters (1) gekoppelt ist.

2. Vorrichtung nach Anspruch 1, **dadurch gekennzeichnet, dass** der Behälter (1) im Bereich des unteren Endes des Stabes oder Spazierstocks (10) angebracht ist, wobei zumindest in der Transport-Position die Hochachse des Behälters (1) parallel zur Achse des Stabes oder Spazierstocks (10) ausgerichtet ist.

3. Vorrichtung nach Anspruch 1 oder 2, **dadurch gekennzeichnet,**
**dass**
der Stab oder Spazierstock (10) den Behälter (1) zumindest in der Transport-Position nach unten überragt.

4. Vorrichtung nach mindestens einem der Ansprüche 1 bis 3,
**dadurch gekennzeichnet, dass**
der Deckel (2) gleichzeitig oder zeitlich versetzt mit der Behälterbewegung in eine Transport-Position schließbar ist und gleichzeitig oder zeitlich versetzt mit der Behälterbewegung in eine Aufsammel-Position aufmachbar ist.

5. Vorrichtung nach mindestens einem der Ansprüche 1 bis 4,
**dadurch gekennzeichnet, dass**
der Behälter (1) mit einem ersten Scharnier (11) an dem Stab oder Spazierstock (10) angebracht ist.

6. Vorrichtung nach mindestens einem der Ansprüche 1 bis 5 ,
**dadurch gekennzeichnet, dass**
die Betätigungseinrichtung (13) enthält:
- ein erstes Kraftübertragungselement (7), das an Längsführungen (8) der Befestigungseinrichtung (3) geführt ist;
- mindestens ein zweites Kraftübertragungselement (4), das an seinem einen Ende an dem ersten Kraftübertragungselement (7) drehbar befestigt ist, wobei ein anderes Ende des zweiten Kraftübertragungselements (4) drehbar an dem Behälter (1) angebracht ist;
- ein Rückhalteelement (5), über das das zweite Kraftübertragungselement (4) an seinem einen Ende mit dem Spazierstock (10) verbunden ist; und
- ein Betätigungselement (9), das an einem oberen Ende des ersten Kraftübertragungselements (7) vorgesehen ist.

7. Vorrichtung nach mindestens einem der Ansprüche 1 bis 6 ,
**dadurch gekennzeichnet, dass**
das zweite Kraftübertragungselement (4) an einer Seite des Behälters (1) angebracht ist, oder
je ein zweites Kraftübertragungselement (4) an gegenüberliegenden Seiten des Behälters (1) angebracht ist.

8. Vorrichtung nach mindestens einem der Ansprüche 1 bis 7,
**dadurch gekennzeichnet, dass**
der Behälter (1) eine vieleckige oder ovale Querschnittsfläche aufweist oder keilförmig ist.

9. Vorrichtung nach mindestens einem der Ansprüche 1 bis 8,
**dadurch gekennzeichnet, dass**
die Öffnungsrichtung des Deckels (2) zum Stab oder Spazierstock (10) hin oder vom Stab oder Spazierstock (10) weg gerichtet ist.

10. Vorrichtung nach mindestens einem der Ansprüche 1 bis 9,
**dadurch gekennzeichnet, dass**
der Öffnungswinkel des Deckels (2) 30°, 45°, 60°, 75°, 90°, 105°, 120° oder 135° beträgt.

11. Vorrichtung nach mindestens einem der Ansprüche 1 bis 10,
**dadurch gekennzeichnet, dass**
die Gegenstände Wertgegenstände, Unrat oder Fäkalien sind.

12. Vorrichtung nach mindestens einem der Ansprüche 1 bis 11,
**dadurch gekennzeichnet, dass**
der Stab oder Spazierstock (10) hohl ausgebildet ist, wobei die Innenwände des Stab oder Spazierstocks (10) als Längsführungen (8) für das erste Kraftübertragungselement (7) wirken.

13. Vorrichtung nach mindestens einem der Ansprüche 1 bis 12,
**dadurch gekennzeichnet, dass**
das erste Kraftübertragungselement (7) an einem ersten Ende des Stabs oder Spazierstocks (10) über diesen hinaus ragt.

14. Vorrichtung nach mindestens einem der Ansprüche 1 bis 13,
**dadurch gekennzeichnet, dass**
sich das erste Kraftübertragungselement (7) über ein Rückhalteelement (5) von einem zweiten Ende des Spazierstocks (10) abstützt.
